# EUROPÄISCHE PATENTANMELDUNG

(11) **EP 2 199 735 A2**
(43) Veröffentlichungstag der Anmeldung: **23.06.2010**
(21) Anmeldenummer: 09178282.1
(22) Anmeldetag: 08.12.2009
(51) Int. Cl.: G01B 11/245, G01B 11/10, B61K 9/12

(54) **Verfahren zur berührungslosen dynamischen Erfassung des Durchmessers eines Schienenfahrzeugrades**

(30) Priorität: 16.12.2008 DE 102008062589
(71) Anmelder: GHH Radsatz Service Gmbh, 46145 Oberhausen (DE)
(72) Erfinder: Hascher, Jan, 45721, Haltern am See (DE); Krautwald, Stefan, 45468, Mülheim a. d. Ruhr (DE)
(74) Vertreter: Patentanwälte Dr. Solf & Zapf

(57) **Zusammenfassung**

Die Erfindung betrifft ein Verfahren zur berührungslosen dynamischen Erfassung des Durchmessers (D) eines auf einer Schiene (1) rollenden Schienenfahrzeugrades (2). Um bei einfachem Aufbau der Messvorrichtung eine hohe Messgenauigkeit zu gewährleisten, wobei kein Einsatz von Lasertechnik erforderlich ist, wird vorgeschlagen, dass eine Oberkante (3) der Schiene (1), sowie ein Rand (4) des Schienenfahrzeugrades (2) im Bereich eines Spurkranzes (5) oberhalb eines Schienenkopfes (6) von einer Seite beleuchtet und von der anderen Seite mittels zweier, jeweils digitalisierte Aufnahmen liefernden Abbildungseinrichtungen (7, 8) aufgenommen werden, wonach aus mindestens zwei Aufnahmen des Randes (4) mittels eines Bildverarbeitungsalgorithmus der Mittelpunkt (M) des Schienenfahrzeugrades (2) und aus der Differenz zwischen der Oberkante (3) der Schiene (1) und dem Mittelpunkt (M) der Durchmesser (D) des Schienenfahrzeugrades (2) bestimmt werden.

## Beschreibung

Die vorliegende Erfindung betrifft ein Verfahren zur berührungslosen dynamischen Erfassung des Durchmessers eines auf einer Schiene rollenden Schienenfahrzeugrades.

Ein derartiges Verfahren ist aus der EP 1 606 577 B1 bekannt. Dieses Dokument bezieht sich zunächst auf eine Erfassung des Profils eines Schienenfahrzeugrades, insbesondere zum Zweck einer Bestimmung von an dem Schienenfahrzeugrad aufgetretenem Verschleiß. Dabei wird mindestens ein von einer Lasereinrichtung erzeugter, zu mindestens einem linienförmigen Lichtband aufgeweiteter Lichtstrahl unter einem ersten Winkel auf mindestens einen Bereich der Oberfläche des Schienenfahrzeugrades projiziert, wobei das Schienenfahrzeugrad an der Lasereinrichtung vorbeibewegt wird und das von dem Bereich der Oberfläche des Schienenfahrzeugrades unter einem zweiten Winkel reflektierte Licht in einer Abbildungseinrichtung, deren optische Achse in einem festen Triangulationswinkel zur Projektionsrichtung der Lasereinrichtung steht und die in einem festen Basisabstand zur Lasereinrichtung angeordnet ist, fokussiert und mit einer gegenüber einer Bewegungsgeschwindigkeit des Schienenfahrzeugrades hohen Frequenz erfasst. Danach werden aus von der Abbildungseinrichtung abgegebenen Signalen, in Abhängigkeit von dem Triangulationswinkel und dem Basisabstand in einer Datenverarbeitungseinrichtung durch trigonometrische Beziehungen die Messwerte des Profils gewonnen.

Dieses Verfahren wird auch als geeignet zur Ermittlung eines Radkranzinnendurchmessers beschrieben. So kann dieser Radkranzinnendurchmesser beispielsweise aus drei Messwerten ermittelt werden, die durch berührungslose dynamische Messungen am bewegten Rad erfasst werden und in der gleichen Art, insbesondere aber unidirektional, d. h. bei gleicher Ausrichtung der jeweiligen Lichtbänder, vorgenommen werden wie die Erfassung des Profilogramms. Bei den Messwerten kann es sich dabei um drei auf einem Kreisbogen mit dem gesuchten Radkranzinnendurchmesser liegende Messwerte handeln, die als Ordinatenwerte in einem kartesischen Koordinatensystem ermittelt werden und die derart transformiert werden, dass sie jeweils die halbe Länge einer Sehne durch den Kreisbogen repräsentieren. Der nichtverschleißende Radkranzinnendurchmesser des rollenden Rades kann dann durch Lösung eines Gleichungssystems ermittelt werden, das die jeweiligen transformierten Ordinatenwerte, die zugehörigen Abszissenwerte und den Radkranzinnendurchmesser enthält. Bei dem bekannten Verfahren müssen bei der Auswertung Korrekturwerte vorgesehen werden, die der Geschwindigkeit und den an unterschiedlichen Messorten auftretenden Verzerrungen Rechnung tragen.

Der vorliegenden Erfindung liegt die Aufgabe zugrunde, ein berührungsloses Verfahren der eingangs genannten Art zu schaffen, das bei einfachem Aufbau der Messvorrichtung eine hohe Messgenauigkeit gewährleistet und den Einsatz von Lasertechnik nicht erfordert.

Erfindungsgemäß wird dies durch ein solches Verfahren erreicht, bei dem eine Oberkante der Schiene, sowie ein Rand des Schienenfahrzeugrades im Bereich eines Spurkranzes oberhalb eines Schienenkopfes von einer Seite beleuchtet und von der anderen Seite mittels zweier, jeweils digitalisierte Aufnahmen liefernden Abbildungseinrichtungen aufgenommen werden, wonach aus mindestens zwei Aufnahmen des Randes mittels eines Bildverarbeitungsalgorithmus der Mittelpunkt des Schienenfahrzeugrades und aus der Differenz zwischen der Oberkante der Schiene und dem Mittelpunkt der Durchmesser des Schienenfahrzeugrades bestimmt werden.

Als Abbildungseinrichtungen können hierbei Kameras, insbesondere CCD-Kameras, und zur Beleuchtung Halogenlampen, insbesondere zwei Halogenlampen, eingesetzt werden, deren Licht, insbesondere mittels der Fresnel-Linsen, gebündelt und parallelisiert wird, eingesetzt werden.

Bei einfachem Aufbau der Messvorrichtung kann durch den Einsatz des Bildverarbeitungsalgorithmus eine hohe Messgenauigkeit erreicht werden.

Hierbei kann insbesondere vorgesehen werden, dass die Beleuchtung und/oder die Aufnahmen jeweils telezentrisch bzw. mit telezentrischer Optik erfolgen. Eine telezentrische Optik zeichnet sich dadurch aus, dass die sogenannte Eintritts- und/oder die sogenannte Austrittspupille im Unendlichen liegen. Wenn die Eintrittspupille im Unendlichen liegt, laufen die Hauptstrahlen im Objektraum alle parallel zur optischen Achse. Liegt die Austrittspupille im Unendlichen, so treffen alle Hauptstrahlen senkrecht auf die Bildebene. Erfindungsgemäß ist es dabei von Vorteil, wenn sowohl Beleuchtung, als auch Aufnahmen jeweils telezentrisch erfolgen, also eine sogenannte beidseitige Telezentrik vorliegt.

Hierbei ist es unter dem Gesichtspunkt einer hohen Messgenauigkeit von Vorteil, wenn das zur Beleuchtung eingesetzte Licht, insbesondere mit Hilfe von Fresnel-Linsen, gebündelt und parallelisiert wird. Hierauf wird nachfolgend noch im Detail eingegangen.

Weitere vorteilhafte Ausführungen der Erfindung sind in den Unteransprüchen und in der nachfolgenden detaillierten Beschreibung enthalten.

Anhand eines durch die beiliegende Zeichnung veranschaulichten Ausführungsbeispiels wird die Erfindung näher erläutert. Dabei zeigen
- Fig. 1: in einer perspektivischen Ansicht, eine Anordnung zur Veranschaulichung des erfindungsgemäßen Verfahrens,
- Fig. 2a und 2b: jeweils in einer schematisierten Ansicht, einen Verlauf des Strahlengangs einer Lichtquelle ohne und mit Parallelisierung,
- Fig. 3: in einer Stirnansicht, ein Schienenfahrzeugrad auf einer Schiene,
- Fig. 4a und 4b: jeweils in einer bereits einer Bildverarbeitung unterzogenen Ansicht, eine fotografische Aufnahme einer hinteren und einer vorderen Radkante eines Schienenfahrzeugrades,
- Fig. 5: einen Programmablaufplan zum erfindungsgemäßen Verfahren.

In den verschiedenen Figuren der Zeichnung sind gleiche Teile stets auch mit den gleichen Bezugszeichen versehen, so dass sie in der Regel auch jeweils nur einmal beschrieben werden.

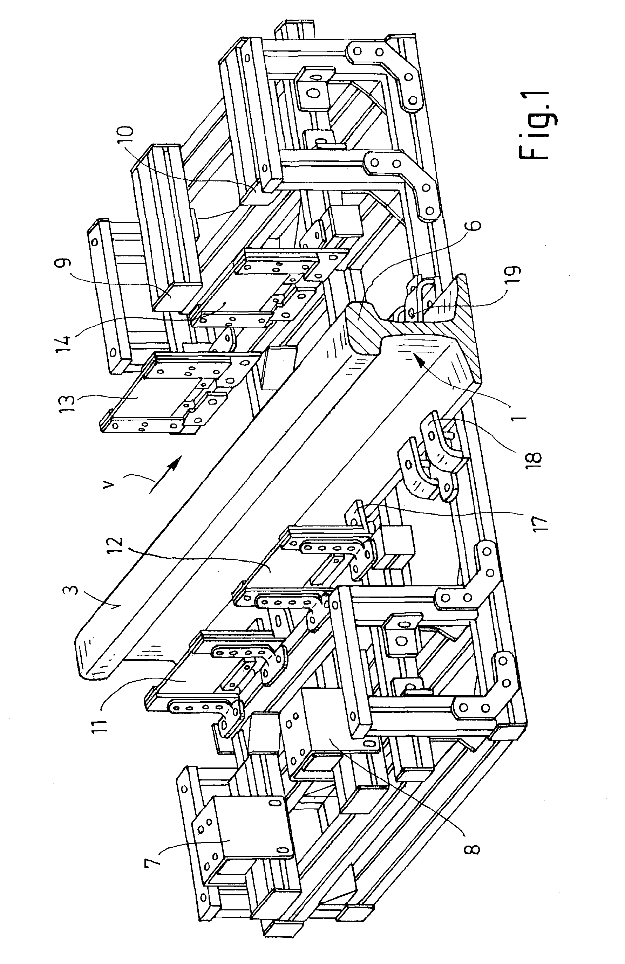

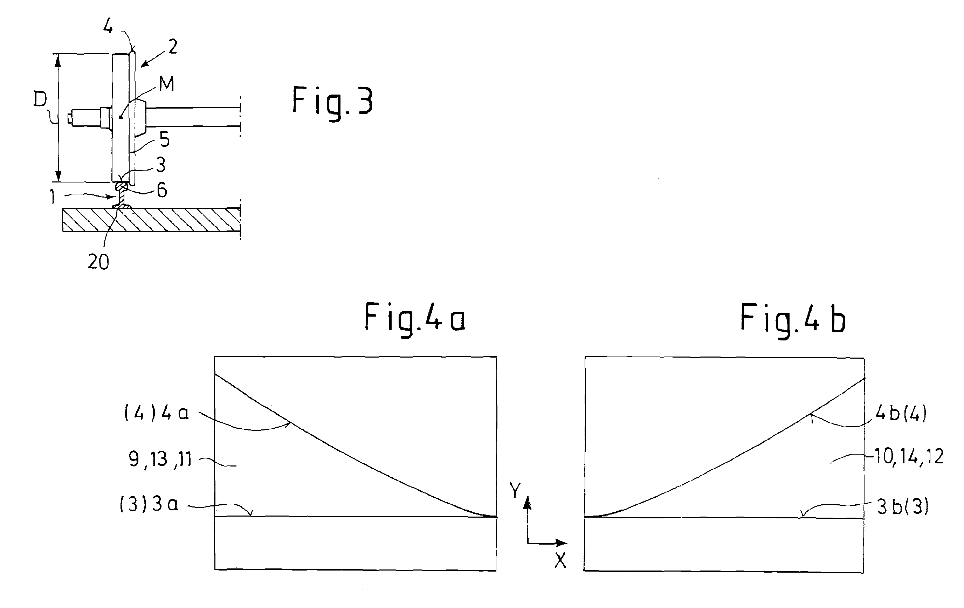

Wie zunächst aus Fig. 1 und 3 hervorgeht, bezieht sich das erfindungsgemäße Verfahren auf eine berührungslose und dynamische Erfassung des Durchmessers D eines auf einer Schiene 1 rollenden Schienenfahrzeugrades 2, wie ein solches in Fig. 3 dargestellt ist.

Hierzu ist erfindungsgemäß vorgesehen, dass zunächst eine Oberkante 3 der Schiene 1, sowie ein Rand 4 des Schienenfahrzeugrades 2 im Bereich eines Spurkranzes 5 oberhalb eines Schienenkopfes 6 von einer Seite, insbesondere telezentrisch, beleuchtet und von der anderen Seite mittels zweier, jeweils digitalisierte Aufnahmen liefernden Abbildungseinrichtungen 7, 8, insbesondere mit telezentrischer Optik, aufgenommen werden. Danach werden aus mindestens zwei Aufnahmen des Randes 4 mittels eines Bildverarbeitungsalgorithmus der Mittelpunkt M des Schienenfahrzeugrades 2 und aus der Differenz zwischen der Oberkante 3 der Schiene 1 und dem Mittelpunkt M der Durchmesser D des Schienenfahrzeugrades 2 bestimmt.

Als Abbildungseinrichtungen 7, 8 können bevorzugt Kameras, insbesondere CCD-Kameras, eingesetzt werden.

Zur Beleuchtung nach der Art einer Durchlichtmessung können als Lichtquellen 9, 10 Halogenlampen, insbesondere zwei Halogenlampen, eingesetzt werden, deren Licht, insbesondere mit Hilfe von jeweils paarweise beidseitig der Schiene angeordneten Fresnel-Linsen 11, 12, 13, 14 gebündelt und parallelisiert wird. Mittels der auf der Seite der Lichtquellen 9, 10 angeordneten Fresnel-Linsen 13, 14 erfolgt dabei die Parallelisierung, und mittels der auf der Seite der Abbildungseinrichtungen 7, 8 angeordneten Fresnel-Linsen 11, 12 wird die Kante 4 des Schienenfahrzeugrades 2 unter Zuhilfenahme der Kameraoptik auf die CCD-Matrix der Kamera abgebildet, wobei das Licht wieder gebündelt wird.

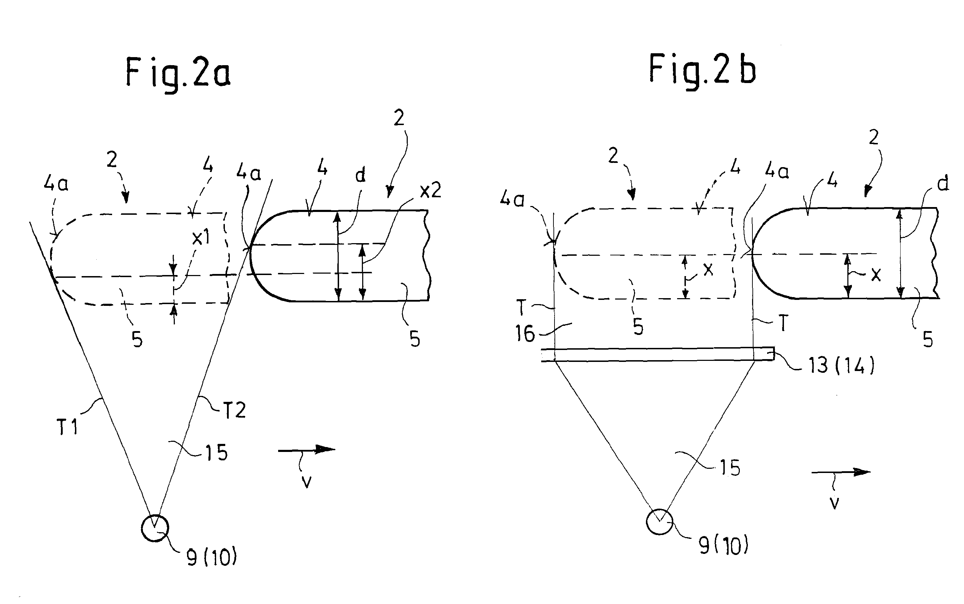

Die Wirkung der Parallelisierung wird durch Fig. 2a und 2b veranschaulicht. Fig. 2a zeigt dabei einen Verlauf des Strahlengangs 15 einer Lichtquelle 9 bzw. 10 ohne Parallelisierung und Fig. 2b einen Verlauf des Strahlengangs 15, 16 einer Lichtquelle 9 bzw. 10 mit Parallelisierung durch eine Fresnel-Linse 13 bzw. 14. Das Schienenfahrzeugrad 2 ist jeweils mit Strichlinien in einer ersten Position und mit Volllinien in einer zweiten Position dargestellt. Außerdem sind Tangenten T1, T2, T an die Radkante 4 gezeigt, an denen jeweils die Bestimmung des Durchmessers D erfolgt. Diese Tangenten kennzeichnen somit den jeweiligen Messort.

Aus Fig. 2a ist dabei zu entnehmen, dass die Tangente T1 auf der Radkante 4 beim Eintritt der Hinterkante des Schienenfahrzeugrades 2 in den divergierenden Verlauf des Strahlengangs 15 der jeweiligen Lichtquelle 9, 10 auf einer - im Hinblick auf die Raddicke d - anderen Position x1 verläuft als es die Position x2 ist, die die Tangente T2 auf der Radkante 4 beim Austritt des Schienenfahrzeugrades 2 aus dem Strahlengang 15 hat. Die Tangenten - und damit der Messort des Durchmessers - wandern somit während der Messung, und der reale Durchmesser D kann nur in einer Position fehlerfrei bestimmt werden.

Aus Fig. 2b ist statt dessen zu entnehmen, dass die Tangente T auf der Radkante 4 beim Eintritt der Hinterkante des Schienenfahrzeugrades 2 in den parallelisierten Verlauf des Strahlengangs 16 der jeweiligen Lichtquelle 9, 10 auf der - im Hinblick auf die Raddicke d - gleichen Position x verläuft wie die Tangente T auf der Radkante 4 beim Austritt des Schienenfahrzeugrades 2 aus dem Strahlengang 16. Bei unterschiedlichen Positionen des Schienenfahrzeugrades 2 wird immer dieselbe Tangente T an der Radkante 4 gemessen.

Das Verfahren sichert dabei eine extrem hohe Messgenauigkeit. Außerdem zeichnet es sich durch eine hohe Unanfälligkeit der Messung gegenüber unterschiedlichen Oberflächen-Eigenschaften aus.

Zusätzlich sorgen die telezentrische Beleuchtung bzw. die Aufnahmen mit telezentrischer Optik mit Vorteil dafür, dass die Messung unempfindlich gegen Umgebungslicht wird, welches ja hauptsächlich nicht parallel zur optischen Achse einfällt und so auch nicht in die Kameraoptik gelangt. Ein Nebeneffekt dieser Beleuchtungsweise ist eine sehr hohe Lichtausbeute. So brauchen die bevorzugt eingesetzten Halogenlampen nur zu glimmen und es ist möglich, nahezu punktförmige Lichtquellen 9, 10 zu verwenden.

Der Verfahrensablauf des erfindungsgemäßen Verfahrens in der in Fig. 1 dargestellten Messstrecke ist dabei folgender.

Das auf der Schiene 1 mit einer (durch den Pfeil mit dem Bezugszeichen v angedeuteten) Geschwindigkeit rollende Schienenfahrzeugrad 2 löst zunächst beim Überrollen ein Signal eines neben der Schiene 1 angeordneten, nicht dargestellten Sensors aus, wodurch die Messung gestartet wird.

Das bedeutet, dass die Lichtquellen 9, 10 eingeschaltet werden und die Abbildungseinrichtungen 7, 8, insbesondere Kameras, mit einer kontinuierlichen Bildaufnahme beginnen.

Die Abbildungseinrichtungen 7, 8 liefern Bilder mit einer Frequenz von bevorzugt etwa 200 Hz. Während der Messung erfolgt eine Binarisierung der Bilder, d. h. eine Reduzierung der Farbwerte und Graustufen auf nur Schwarz und Weiß, da die Anzahl der erleuchteten Pixel für die Bewertung der Bilder benutzt wird.

Fig. 4a zeigt dabei ein durch Bildverarbeitung binarisiertes Bild einer fotografischen Aufnahme, die von der in Fig. 1 vom Schienenfahrzeugrad 2 zuerst passierten, hinteren Abbildungseinrichtung 7 von einer hinteren Radkante 4a des Schienenfahrzeugrades 2 stammt, und Fig. 4b ein solches an einer vorderen Radkante 4b, das von der in Fig. 1 vorderen Abbildungseinrichtung 8 stammt, die das Schienenfahrzeugrad 2 an zweiter Stelle passiert.

Wie in Fig. 4a und 4b durch die jeweilige Angabe der Bezugszeichen 9, 13, 11 und 10, 14, 12 im weißen Feld des Bildes angedeutet ist, wirken bei der Bildentstehung gemäß Fig. 4a die in Fig. 1 hintere Lichtquelle 9 sowie die hinteren Fresnel-Linsen 13, 11 mit, während bei der Bildentstehung gemäß Fig. 4b die in Fig. 1 vordere Lichtquelle 10 sowie die vorderen Fresnel-Linsen 14, 12 mitwirken.

Sobald im Bild, das durch die vordere Abbildungseinrichtung 8 erzeugt wird, alle Pixel schwarz sind, wird die Messung gestoppt, da in diesem Moment die Vorderkante 4b des Schienenfahrzeugrades 2 die Abbildungseinrichtung 8 passiert hat.

Die beiden Abbildungseinrichtungen 7, 8 werden bevorzugt synchronisiert betrieben. Auf diese Weise ist es möglich, durch einen Algorithmus jeweils zusammengehörige Bilder der Vorderkante 4b und der Hinterkante 4a einander zuzuordnen, welche eine bestimmte Anzahl von Pixeln aufweisen, aus der sich ergibt, dass das Schienenfahrzeugrad 2 im jeweiligen Ausschnitt am besten positioniert ist. Als Pixel können dabei entweder die weißen oder die schwarzen binarisierten Bildpunkte verwendet werden.

Zur Ermittlung des Radius R bzw. des Durchmessers D des Schienenfahrzeugrades 2 werden in die ermittelten Schwarz-Weiß-Bilder der vorderen Radkante 4b und der hinteren Radkante 4a des Schienenfahrzeugrades 2 jeweils Tangenten T an die Radkanten 4a, 4b angelegt.

Im einfachsten Fall lässt sich bei bekanntem Abstand der Abbildungseinrichtungen 7, 8 zueinander der Mittelpunkt M des Schienenfahrzeugrades 2 ermitteln, indem dieser als Schnittpunkt der Senkrechten auf den Berührungspunkten der Tangenten T berechnet wird.

Danach wird der jeweilige Verlauf 3b, 3a, den die Oberkante 3 der Schiene 1 in den Schwarz-Weiß-Bildern der vorderen Radkante 4b und der hinteren Radkante 4a des Schienenfahrzeugrades 2 zeigt, jeweils mathematisch abgebildet, wobei sich dann der Radius R des Schienenfahrzeugrades 2 in seinem Aufstandspunkt auf der Schiene 1 als kleinster Abstand des Kreismittelpunktes M von der Kante 3 bzw. deren jeweiliger Abbildung 3b, 3a ergibt.

Im erweiterten Fall erfolgt eine Ermittlung von mehreren Sekanten aus den binarisierten Bildern. Die Berechnung des Kreismittelpunktes M erfolgt hierbei aus den Schnittpunkten der Mittelsenkrechten der Sekanten. Bei dieser Methode stehen mehr Datenpunkte zur Verfügung, so dass eine Mittelwertbildung vorgenommen werden kann und das Ergebnis genauer wird.

Im noch stärker erweiterten Fall können sogenannte Kantenfits oder Kreisfits - d. h. mathematisch-numerische Approximationen der Kreiskurve - durchgeführt werden, wozu auch auf die nicht binarisierten Grauwertbilder zurückgegriffen werden kann. Auch hieraus erhält man den Radius R des Schienenfahrzeugrades 2 in seinem Aufstandspunkt auf der Schiene 1.

Wichtig ist dabei, dass immer jeweils zwei Bilder verwendet werden sollten, eines der vorderen Radkante 4b und eines der hinteren Radkante 4a, das dem ersten zugeordnet ist. Wegen des kleinen Bildausschnittes führen ansonsten Berechnungen mit den Werten aus nur einem einzigen Bild nicht zu genauen Ergebnissen.

Die Ergebnisse dieser Messung können an einen zentralen Mess-PC übertragen und dort - insbesondere zusammen mit Kenngrößen für das Radprofil - ausgewertet werden.

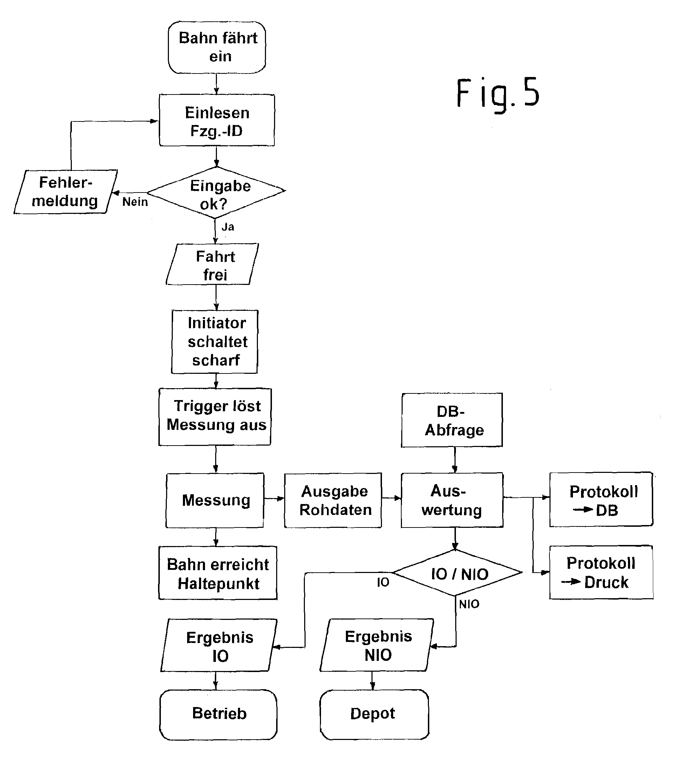

Der Programmablaufplan in Fig. 5 zeigt, wie das erfindungsgemäße Verfahren in einen in der Praxis ablaufenden Zyklus eingebunden sein kann. Nach dem Einfahren des Schienenfahrzeugs ("Bahn fährt ein") in eine Messstrecke, in der das erfindungsgemäße Verfahren realisiert wird, wird eine Fahrzeugidentifikation vorgenommen ("Einlesen Fzg.-ID"). Die Fahrzeugnummer kann manuell eingegeben, von einem firmeninternen Leitsystem übernommen oder mittels einer Kamera vom Fahrzeug abgelesen werden. Je nachdem, ob das Einlesen der Fahrzeugidentifikationsnummer in Ordnung war oder nicht, wird eine Fehlermeldung ausgegeben und das Einlesen wiederholt oder die Fahrt für das Schienenfahrzeug wird frei gegeben. Danach schaltet ein Initiator scharf und ein Trigger löst die Messung aus. Die Messung erfolgt erfindungsgemäß, wobei nach der Ausgabe der Rohdaten diese, wie beschrieben, in einer Datenverarbeitungseinrichtung, z. B. in dem erwähnten zentralen Mess-PC, bevorzugt zusammen mit Daten des Profils des Schienenfahrzeugrades, einer Auswertung unterzogen und danach zum Druck ("Protokoll Druck") oder zur Weitergabe an den Eigner des Schienenfahrzeugs ("Protokoll DB") protokolliert werden. Ein Messbericht kann beispielsweise in den Formaten HTML und/oder PDF erzeugt und abgespeichert werden.

Die ausgewerteten Daten können aus einer Datenbank der Datenverarbeitungseinrichtung auch abgefragt werden ("DB-Abfrage"). Bei einer Überprüfung der Daten wird dann der Qualitätszustand des Schienenfahrzeugrades 2 geprüft. Hierzu enthält der Programmablaufplan den Entscheidungskasten "IO (in Ordnung) / NIO (nicht in Ordnung)". Je nachdem, wie das Ergebnis ausfällt, kann der Betrieb mit dem Schienenfahrzeug aufrechterhalten (Kasten "Betrieb") oder es muss einem Depot zugeführt werden (Kasten "Depot"). Das Bewertungsergebnis kann dabei über einen Bildschirm oder eine Ampel zur Anzeige gebracht werden.

Die ausgewerteten Daten können zusammen mit anderen für ein Schienenfahrzeugrad 2 charakteristischen Daten auch zu Zwecken der Radiofrequenz-Identifizierung (RFID) in einem am Schienenfahrzeugrad 2 befestigten Transponder gespeichert und von dort bedarfsweise wieder ausgelesen werden. Die RFID kann vorzugsweise auch bereits dazu benutzt werden, um nach dem Einfahren des Schienenfahrzeugs ("Bahn fährt ein") in die Messstrecke die Fahrzeugidentifikation vorzunehmen. Mittels der RFID und der Datenbank kann somit vorteilhafterweise eine ganze Radflotte überwacht werden.

Wie sich aus den vorstehenden Ausführungen schon teilweise ergibt, bestehen weitere Vorteile des erfindungsgemäßen Verfahrens darin, dass die Lichtquellen 9, 10, die das Licht fokussierenden und parallelisierenden optischen Einrichtungen, insbesondere die Fresnel-Linsen 11, 12, 13, 14 und die Abbildungseinrichtungen 7, 8 - beispielsweise, wie dargestellt, mittels anklemmbaren oder anschraubbaren Halterungen 17, 18 - direkt an der Schiene 1 montiert, z. B. an einem Schienenfuß 19 eines Doppel-T-Profils der Schiene 1, werden können, so dass kein zusätzliches Fundament oder Ständer notwendig ist. Es ist auch kein Aufschneiden der Schiene 1 erforderlich, weil die von dem Verfahren benutzten Einrichtungen komplett seitlich der Schiene 1 angebracht werden können. Die Messung kann dabei vollautomatisch während der Vorbeifahrt des Schienenfahrzeugs erfolgen, wobei durch diese Bauform auch eine optimale Eignung des erfindungsgemäßen Verfahrens für Niederflurfahrzeuge vorliegt. Die Messung kann bei einer Geschwindigkeit v des Schienenfahrzeugs von etwa 3 bis 15 km/h erfolgen.

Die vorliegende Erfindung ist dabei nicht auf das dargestellte Ausführungsbeispiel, insbesondere nicht auf den Einsatz der beschriebenen Kameras als Abbildungseinrichtungen 7, 8, Halogenlampen als Leuchtquellen 9, 10 und Fresnel-Linsen 11, 12, 13, 14 zur Bündelung und Parallelisierung des Strahlengangs 15, 16 beschränkt, sondern umfasst alle im Sinne der Erfindung gleichwirkenden Mittel und Maßnahmen. Des Weiteren kann der Fachmann die Erfindung durch zusätzliche vorteilhafte Maßnahmen - beispielsweise die Anbindung von geeigneten Verfahren zur Profilbestimmung des Schienenfahrzeugrades 2 - ergänzen, ohne dass der Rahmen der Erfindung verlassen wird.

Ferner ist die Erfindung nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

### Bezugszeichen

- 1: Schiene
- 2: Schienenfahrzeugrad
- 3: Oberkante von 1
- 4: Radkante von 2
- 4a: hintere Radkante von 2
- 4b: vordere Radkante von 2
- 5: Spurkranz von 2
- 6: Schienenkopf von 1
- 7,8: Abbildungseinrichtungen
- 9, 10: Lichtquellen
- 11, 12, 13, 14: Fresnel-Linsen
- 15: divergierender Strahlengang von 9, 10
- 16: paralleler Strahlengang von 9, 10
- 17: Halterung an 1 für 12 (11, 13, 14)
- 18: Halterung an 1 für 7, 8
- 19: Halterung an 1 für 9, 10
- 20: Schienenfuß von 1

- D: Durchmesser von 2 im Aufstandspunkt auf 1
- d: Dicke von 2
- R: Radius von 2
- T: Tangente an 4a (Fig. 2b)
- T1: erste Tangente an 4a (Fig. 2a)
- T2: zweite Tangente an 4a (Fig. 2a)
- v: Geschwindigkeit von 2 auf 1
- x, x1, x2: Messpositionen auf 4a (4)

## Patentansprüche

1. Verfahren zur berührungslosen dynamischen Erfassung des Durchmessers (D) eines auf einer Schiene (1) rollenden Schienenfahrzeugrades (2),
**dadurch gekennzeichnet, dass** eine Oberkante (3) der Schiene (1), sowie ein Rand (4) des Schienenfahrzeugrades (2) im Bereich eines Spurkranzes (5) oberhalb eines Schienenkopfes (6) von einer Seite beleuchtet und von der anderen Seite mittels zweier, jeweils digitalisierte Aufnahmen liefernden Abbildungseinrichtungen (7, 8) aufgenommen werden, wonach aus mindestens zwei Aufnahmen des Randes (4) mittels eines Bildverarbeitungsalgorithmus der Mittelpunkt (M) des Schienenfahrzeugrades (2) und aus der Differenz zwischen der Oberkante (3) der Schiene (1) und dem Mittelpunkt (M) der Durchmesser (D) des Schienenfahrzeugrades (2) bestimmt werden.

2. Verfahren nach Anspruch 1,
**dadurch gekennzeichnet, dass** die Beleuchtung und die Aufnahmen jeweils telezentrisch bzw. mit telezentrischer Optik erfolgen.

3. Verfahren nach Anspruch 1 oder 2,
**dadurch gekennzeichnet, dass** die beiden Abbildungseinrichtungen (7, 8) synchronisiert arbeiten.

4. Verfahren nach einem der Ansprüche 1 bis 3,
**dadurch gekennzeichnet, dass** als Abbildungseinrichtungen (7, 8) Kameras, insbesondere CCD-Kameras, eingesetzt werden.

5. Verfahren nach einem der Ansprüche 1 bis 4,
**dadurch gekennzeichnet, dass** zur Beleuchtung als Lichtquellen (9, 10) Halogenlampen, insbesondere zwei Halogenlampen, eingesetzt werden.

6. Verfahren nach einem der Ansprüche 1 bis 5,
**dadurch gekennzeichnet, dass** das zur Beleuchtung eingesetzte Licht, insbesondere mit Hilfe von Fresnel-Linsen (11, 12, 13, 14), gebündelt und parallelisiert (16) wird.

7. Verfahren nach einem der Ansprüche 1 bis 6,
**dadurch gekennzeichnet, dass** die von den Abbildungseinrichtungen (7, 8) gelieferten Aufnahmen binarisiert werden.

8. Verfahren nach Anspruch 7,
**dadurch gekennzeichnet, dass** entsprechend einer vorgegebenen Anzahl von binarisierten Bildpunkten eine Aufnahme mit optimaler Position des Schienenfahrzeugrades (2) ausgewählt wird.

9. Verfahren nach einem der Ansprüche 1 bis 8,
**dadurch gekennzeichnet, dass**, insbesondere gleichzeitig, eine Abbildungseinrichtung (8) Aufnahmen von einer vorderen Radkante (4b) und eine weitere Abbildungseinrichtung (7) Aufnahmen von einer hinteren Radkante (4a) des Schienenfahrzeugrades (2) liefert.

10. Verfahren nach Anspruch 9,
**dadurch gekennzeichnet, dass** zusammengehörige Bilder der Vorderkante (4b) und der Hinterkante (4a) einander zugeordnet werden.

11. Verfahren nach einem der Ansprüche 1 bis 10,
**dadurch gekennzeichnet, dass** der Verlauf der Oberkante (3) der Schiene (1) und der Kreismittelpunkt (M) der Radkante (4) des Schienenfahrzeugrades (2) aus den, insbesondere binarisierten, Aufnahmen der vorderen Radkante (4b) und der hinteren Radkante (4a) jeweils mathematisch abgebildet werden, wobei sich der Radius (R) des Schienenfahrzeugrades (2) in seinem Aufstandspunkt auf der Schiene (1) als kleinster Abstand des Kreismittelpunktes (M) von der Kante (3) ergibt.

12. Vorrichtung nach einem der Ansprüche 1 bis 11,
**dadurch gekennzeichnet, dass** die Abbildungseinrichtungen (7, 8) und/oder die Lichtquellen (9, 10) und/oder die Fresnel-Linsen (11, 12, 13, 14) zur Messung direkt an der Schiene (1) montiert, z. B. an einem Schienenfuß (20) des Profils der Schiene (1) befestigt, werden.

13. Verfahren nach einem der Ansprüche 1 bis 12,
**dadurch gekennzeichnet, dass** die Messwerte des Durchmessers (D) des Schienenfahrzeugrades (2) zusammen mit anderen für ein Schienenfahrzeugrad (2) charakteristischen Daten zu Zwecken der Radiofrequenz-Identifizierung (RFID) in einem am Schienenfahrzeugrad (2) befestigten Transponder gespeichert und von dort bedarfsweise wieder ausgelesen werden.
